# EUROPEAN PATENT APPLICATION

(11) **EP 4 255 012 A1**
(43) Date of publication of application: **04.10.2023**
(21) Application number: 20966474.7
(22) Date of filing: 24.12.2020
(51) Int. Cl.: H04W 24/04, H04W 76/10

(54) **METHOD AND APPARATUS FOR CONFIGURING SECONDARY CELL GROUP**

(71) Applicant: Huawei Technologies Co., Ltd., Shenzhen, Guangdong 518129 (CN)
(72) Inventor: ZENG, Lei, Shenzhen, Guangdong 518129 (CN); DONG, Baixu, Shenzhen, Guangdong 518129 (CN)
(74) Representative: Gill Jennings & Every LLP
(86) International application number: PCT/CN2020/139022
(87) International publication number: WO 2022/133902

(57) **Abstract**

This application provides a method and an apparatus for configuring a secondary cell group. The method includes: User equipment determines a secondary cell group SCG configuration mode. The user equipment sends a user equipment assistance information message to a network device. The user equipment assistance information message includes an information element indicating the SCG configuration mode, and the SCG configuration mode includes adding an SCG, releasing an SCG, not adding an SCG within a specified time range, or adding an SCG after release. According to the method for configuring a secondary cell group provided in embodiments of this application, the user equipment may directly notify the network device of an SCG configuration expected by the user equipment, so that an SCG may be quickly, effectively, accurately, and flexibly configured.

## Description

### TECHNICAL FIELD

This application relates to the communication field, and more specifically, to a method and an apparatus for configuring a secondary cell group.

### BACKGROUND

With rapid development of mobile communication, users require increasingly high transmission efficiency of devices. In existing communication technologies, transmission requirements can be met by configuring a technology such as dual connectivity (dual connectivity, DC).

For example, in a 5th generation mobile communication (the 5th generation mobile communication technology, 5G) system, to increase uplink and downlink throughputs, long-term evolution (long-term evolution, LTE) and new radio (new radio, NR) dual connectivity is introduced. A base station (eNodeB) in an LTE system serves as a master cell group (master cell group, MCG), and a base station (gNB) in an NR system serves as a secondary cell group (secondary cell group, SCG). A dual connectivity establishment process is as follows: User equipment (user equipment, UE) first establishes an MCG connection to a network device, and delivers an SCG configuration through a signaling radio bearer (signaling radio bearer, SRB) of the MCG, and the SCG notifies the network device of an SCG configuration result through the MCG. However, when an exception occurs in an SCG configuration process, MCG reestablishment is triggered, and the SCG is reconfigured based on a measurement status after the MCG reestablishment is completed. Alternatively, when the SCG is in a stable state, and an SCG internal exception occurs, an SCG configuration failure message is reported to the network device. The network device may choose to release the SCG configuration and then add an SCG configuration, or the network device may change the SCG configuration by sending a message carrying an SCG change, to restore the SCG.

However, the SCG exception inevitably affects a status of the MCG, and further affects a service, power consumption, user experience, and the like of the entire user equipment. Therefore, in a DC state, especially after an SCG exception occurs, how the user equipment directly notifies the network device of an SCG configuration expected by the user equipment is an urgent problem to be resolved currently.

### SUMMARY

This application provides a method and an apparatus for configuring a secondary cell group, to quickly, effectively, accurately, and flexibly configure an SCG.

According to a first aspect, a method for configuring a secondary cell group is provided. The method includes: User equipment determines a secondary cell group SCG configuration mode. The user equipment sends a user equipment assistance information message to a network device. The user equipment assistance information message includes an information element indicating the SCG configuration mode. The SCG configuration mode includes adding an SCG, releasing an SCG, not adding an SCG within a specified time range, or adding an SCG after release.

After determining the SCG configuration mode, the user equipment sends the user equipment assistance information message to the network device. The assistance information message includes the information element indicating the SCG configuration mode, to enable the user equipment to explicitly notify the network device of an expected SCG configuration, so that the configuration of the SCG is more effective, accurate, and flexible.

With reference to possible implementations of the first aspect, in a first possible implementation of the first aspect, the SCG configuration mode is the not adding an SCG within a specified time range. The user equipment assistance information message further includes a first time range. The first time range indicates not to add an SCG within the first time range.

With reference to the first possible implementation of the first aspect, in a second possible implementation of the first aspect, the method further includes: The user equipment receives a first configuration message from a network device. The first configuration message indicates the user equipment to release a first SCG. The user equipment is in a dual connectivity state. The user equipment releases the first SCG based on the first configuration message.

With reference to the second possible implementation of the first aspect, in a third possible implementation of the first aspect, the method further includes: The user equipment receives a second configuration message from the network device. The second configuration message includes a configuration of a second SCG. The second configuration message indicates the user equipment to add the second SCG. The user equipment adds the second SCG based on the second configuration message. The second SCG is different from the first SCG.

With reference to the third possible implementation of the first aspect, in a fourth possible implementation of the first aspect, before the user equipment receives the second configuration message from the network device, the method further includes: The user equipment receives a first measurement message from the network device. The first measurement message carries SCG measurement control information. The user equipment measures channel quality of an SCG based on the first measurement message. The user equipment sends a second measurement message to the network device. The second measurement message carries a measurement result of the second SCG.

With reference to possible implementations of the first aspect, in a fifth possible implementation of the first aspect, the SCG configuration mode is the adding an SCG after release, and the method further includes: The user equipment receives a third configuration message from the network device. The third configuration message indicates the user equipment to release a first SCG. The user equipment is in a dual connectivity state. The user equipment releases the first SCG based on the third configuration message.

With reference to the fifth possible implementation of the first aspect, in a sixth possible implementation of the first aspect, the method further includes: The user equipment receives a fourth configuration message from the network device. The fourth configuration message includes a configuration of a second SCG. The fourth configuration message indicates the user equipment to add the second SCG. The second SCG is different from the first SCG. The user equipment adds the second SCG based on the fourth configuration message.

With reference to the sixth possible implementation of the first aspect, in a seventh possible implementation of the first aspect, before the user equipment receives the fourth configuration message from the network device, the method further includes: The user equipment receives a third measurement message from the network device. The third measurement message carries SCG measurement control information. The user equipment measures channel quality of an SCG based on the third measurement message. The user equipment sends a fourth measurement message to the network device. The fourth measurement message carries a measurement result of the second SCG.

With reference to possible implementations of the first aspect, in an eighth possible implementation of the first aspect, the SCG configuration mode is the adding an SCG after release, and the method further includes: The user equipment receives a fifth configuration message from the network device. The fifth configuration message further includes a configuration of a second SCG. The fifth configuration message indicates the user equipment to release a first SCG and add the second SCG. The user equipment is in a dual connectivity state. The user equipment releases the first SCG and adds the second SCG based on the fifth configuration message. The second SCG is different from the first SCG.

With reference to possible implementations of the first aspect, in a ninth possible implementation of the first aspect, the SCG configuration mode is the adding an SCG, and the method further includes: The user equipment receives a sixth configuration message from the network device. The sixth configuration message indicates the user equipment to add an SCG. The user equipment is in a single connectivity state. The user equipment adds the SCG based on the sixth configuration message.

With reference to possible implementations of the first aspect, in a tenth possible implementation of the first aspect, the SCG configuration mode is the releasing an SCG, and the method further includes: The user equipment receives a seventh configuration message from the network device. The seventh configuration message indicates the user equipment to release an SCG. The user equipment is in a dual connectivity state. The user equipment releases the SCG based on the sixth configuration message.

According to a second aspect, a method for configuring a secondary cell group is provided. The method includes: A network device receives a user equipment assistance information message from user equipment. The user equipment assistance information message includes an information element indicating an SCG configuration mode. The SCG configuration mode includes adding an SCG, releasing an SCG, not adding an SCG within a specified time range, or adding an SCG after release. The network device determines a configuration scheme of the user equipment based on the SCG configuration mode.

In embodiments of this application, the network device receives the user equipment assistance information message from the user equipment. The assistance information message includes the information element indicating the SCG configuration mode, to enable the network device to determine the configuration scheme of the user equipment based on the SCG configuration mode, and further, to send a corresponding change configuration message to the user equipment, so that the configuration of the SCG is more effective, accurate, and flexible.

With reference to possible implementations of the second aspect, in a first possible implementation of the second aspect, the SCG configuration mode is the not adding an SCG within a specified time range. The user equipment assistance information message further includes a first time range. The first time range indicates not to add an SCG within the first time range.

With reference to the first possible implementation of the second aspect, in a second possible implementation of the second aspect, the method further includes: The network device sends a first configuration message to the user equipment. The first configuration message indicates the user equipment to release the first SCG. The network device starts a timer. Timing duration of the timer is a first time range. The network device ignores a fifth measurement message from the user equipment during running of the timer. The fifth measurement message includes a measurement result of a second SCG. The second SCG is different from the first SCG.

With reference to the second possible implementation of the second aspect, in a third possible implementation of the second aspect, the method further includes: The network device disables the timer. The network device sends a second configuration message to the user equipment. The second configuration message includes a configuration of the second SCG. The second configuration message indicates the user equipment to add the second SCG.

With reference to the third possible implementation of the second aspect, in a fourth possible implementation of the second aspect, before the network device sends the second configuration message to the user equipment, the method further includes: The network device sends a first measurement message to the user equipment. The first measurement message carries SCG measurement control information. The network device receives a second measurement message from the user equipment. The second measurement message carries a measurement result of the second SCG.

With reference to possible implementations of the second aspect, in a fifth possible implementation of the second aspect, the SCG configuration mode is the adding an SCG after release, and the method further includes: The network device sends a third configuration message to the user equipment. The third configuration message indicates the user equipment to release a first SCG.

With reference to the fifth possible implementation of the second aspect, in a sixth possible implementation of the second aspect, the method further includes: The network device sends a fourth configuration message to the user equipment. The fourth configuration message includes a configuration of a second SCG. The fourth configuration message indicates the user equipment to add the second SCG. The second SCG is different from the first SCG.

With reference to the sixth possible implementation of the second aspect, in a seventh possible implementation of the second aspect, before the network device sends the fourth configuration message to the user equipment, the method further includes: The network device sends a third measurement message to the user equipment. The third measurement message carries SCG measurement control information. The network device receives a fourth measurement message from the user equipment. The fourth measurement message carries a measurement result of the second SCG.

With reference to possible implementations of the second aspect, in an eighth possible implementation of the second aspect, the SCG configuration mode is the adding an SCG after release, and the method further includes: The network device sends a fifth configuration message to the user equipment. The fifth configuration message further includes a configuration of a second SCG. The fifth configuration message indicates the user equipment to release a first SCG and add the second SCG. The second SCG is different from the first SCG.

With reference to possible implementation of the second aspect, in a ninth possible implementation of the second aspect, the SCG configuration mode is the adding an SCG, and the method further includes: The network device sends a sixth configuration message to the user equipment. The sixth configuration message indicates the user equipment to add an SCG.

With reference to possible implementations of the second aspect, in a tenth possible implementation of the second aspect, the SCG configuration mode is the releasing an SCG, and the method further includes: The network device sends a seventh configuration message to the user equipment. The seventh configuration message indicates the user equipment to release an SCG.

According to a third aspect, an apparatus for configuring a secondary cell group is provided. The apparatus includes a processing unit and a transceiver unit. The processing unit is configured to determine a secondary cell group SCG configuration mode. The transceiver unit is configured to send a user equipment assistance information message to a network device. The user equipment assistance information message includes an information element indicating the SCG configuration mode. The SCG configuration mode includes adding an SCG, releasing an SCG, not adding an SCG within a specified time range, or adding an SCG after release.

With reference to possible implementations of the third aspect, in a first possible implementation of the third aspect, the SCG configuration mode is the not adding an SCG within a specified time range. The user equipment assistance information message further includes a first time range. The first time range indicates not to add an SCG within the first time range.

With reference to the first possible implementation of the third aspect, in a second possible implementation of the third aspect, the transceiver unit is further configured to receive a first configuration message from the network device. The first configuration message indicates user equipment to release a first SCG. The user equipment is in a dual connectivity state. The processing unit is configured to release the first SCG based on the first configuration message.

With reference to the second possible implementation of the third aspect, in a third possible implementation of the third aspect, the transceiver unit is further configured to receive a second configuration message from the network device. The second configuration message includes a configuration of a second SCG. The second configuration message indicates the user equipment to add the second SCG. The processing unit is further configured to add the second SCG based on the second configuration message. The second SCG is different from the first SCG.

With reference to the third possible implementation of the third aspect, in a fourth possible implementation of the third aspect, before the user equipment receives the second configuration message from the network device, the transceiver unit is further configured to receive a first measurement message from the network device. The first measurement message carries SCG measurement control information. The processing unit is further configured to measure channel quality of an SCG based on the first measurement message. The transceiver unit is further configured to send a second measurement message to the network device. The second measurement message carries a measurement result of the second SCG.

With reference to possible implementations of the third aspect, in a fifth possible implementation of the third aspect, the SCG configuration mode is the adding an SCG after release, and the transceiver unit is further configured to receive a third configuration message from the network device. The third configuration message indicates the user equipment to release a first SCG. The user equipment is in a dual connectivity state. The processing unit is further configured to release the first SCG based on the third configuration message.

With reference to the fifth possible implementation of the third aspect, in a sixth possible implementation of the third aspect, the transceiver unit is further configured to receive a fourth configuration message from the network device. The fourth configuration message includes a configuration of a second SCG. The fourth configuration message indicates the user equipment to add the second SCG. The second SCG is different from the first SCG. The processing unit is further configured to add the second SCG based on the fourth configuration message.

With reference to the sixth possible implementation of the third aspect, in a seventh possible implementation of the third aspect, before the user equipment receives the fourth configuration message from the network device, the transceiver unit is further configured to receive a third measurement message from the network device. The third measurement message carries SCG measurement control information. The processing unit is further configured to measure channel quality of an SCG based on the third measurement message. The transceiver unit is further configured to send the fourth measurement message to the network device. The fourth measurement message carries a measurement result of the second SCG.

With reference to possible implementations of the third aspect, in an eighth possible implementation of the third aspect, the SCG configuration mode is the adding an SCG after release, the transceiver unit is further configured to receive a fifth configuration message from the network device. The fifth configuration message further includes a configuration of a second SCG. The fifth configuration message indicates the user equipment to release a first SCG and add the second SCG. The user equipment is in a dual connectivity state. The processing unit is further configured to release the first SCG and add the second SCG based on the fifth configuration message. The second SCG is different from the first SCG.

With reference to possible implementations of the third aspect, in a ninth possible implementation of the third aspect, the SCG configuration mode is the adding an SCG, and the transceiver unit is further configured to receive a sixth configuration message from the network device. The sixth configuration message indicates the user equipment to add an SCG. The user equipment is in a single connectivity state. The processing unit is further configured to add the SCG based on the sixth configuration message.

With reference to possible implementations of the third aspect, in a tenth possible implementation of the third aspect, the SCG configuration mode is the releasing an SCG, and the transceiver unit is further configured to receive a seventh configuration message from the network device. The seventh configuration message indicates the user equipment to release an SCG. The user equipment is in a dual connectivity state. The processing unit is further configured to release the SCG based on the sixth configuration message.

According to a fourth aspect, an apparatus for configuring a secondary cell group is provided. The apparatus includes a transceiver unit and a processing unit. The transceiver unit is configured to receive a user equipment assistance information message from user equipment. The user equipment assistance information message includes an information element indicating an SCG configuration mode. The SCG configuration mode includes adding an SCG, releasing an SCG, not adding an SCG within a specified time range, or adding an SCG after release. The processing unit is configured to determine a configuration scheme of the user equipment based on the SCG configuration mode.

With reference to possible implementations of the fourth aspect, in a first possible implementation of the fourth aspect, the SCG configuration mode is the not adding an SCG within a specified time range. The user equipment assistance information message further includes a first time range. The first time range indicates not to add an SCG within the first time range.

With reference to the first possible implementation of the fourth aspect, in a second possible implementation of the fourth aspect, an apparatus further includes: The transceiver unit is further configured to send a first configuration message to user equipment. The first configuration message indicates the user equipment to release a first SCG. The processing unit is further configured to start a timer. Timing duration of the timer is a first time range. A network device ignores a fifth measurement message from the user equipment during running of the timer. The fifth measurement message includes a measurement result of a second SCG. The second SCG is different from the first SCG.

With reference to the second possible implementation of the fourth aspect, in a third possible implementation of the fourth aspect, the processing unit is further configured to disable the timer. The transceiver unit is further configured to send a second configuration message to the user equipment. The second configuration message includes a configuration of the second SCG. The second configuration message indicates the user equipment to add the second SCG.

With reference to the third possible implementation of the fourth aspect, in a fourth possible implementation of the fourth aspect, before the network device sends the second configuration message to the user equipment, the transceiver unit is further configured to send a first measurement message to the user equipment. The first measurement message carries SCG measurement control information. The transceiver unit is further configured to receive a second measurement message from the user equipment. The second measurement message carries a measurement result of the second SCG.

With reference to possible implementations of the fourth aspect, in a fifth possible implementation of the fourth aspect, the SCG configuration mode is the adding an SCG after release, and the transceiver unit is further configured to send a third configuration message to the user equipment. The third configuration message indicates the user equipment to release a first SCG.

With reference to the fifth possible implementation of the fourth aspect, in a sixth possible implementation of the fourth aspect, the transceiver unit is further configured for the network device to send a fourth configuration message to the user equipment. The fourth configuration message includes a configuration of a second SCG. The fourth configuration message indicates the user equipment to add the second SCG. The second SCG is different from the first SCG.

With reference to the sixth possible implementation of the fourth aspect, in a seventh possible implementation of the fourth aspect, before the network device sends the fourth configuration message to the user equipment, the transceiver unit is further configured to send a third measurement message to the user equipment. The third measurement message carries SCG measurement control information. The transceiver unit is further configured to receive a fourth measurement message from the user equipment. The fourth measurement message carries a measurement result of the second SCG.

With reference to possible implementations of the fourth aspect, in an eighth possible implementation of the fourth aspect, the SCG configuration mode is the adding an SCG after release, and the transceiver unit is further configured to send a fifth configuration message to the user equipment. The fifth configuration message further includes a configuration of a second SCG. The fifth configuration message indicates the user equipment to release a first SCG and add the second SCG. The second SCG is different from the first SCG.

With reference to possible implementations of the fourth aspect, in a ninth possible implementation of the fourth aspect, the SCG configuration mode is the adding an SCG, and the transceiver unit is further configured to send a sixth configuration message to the user equipment. The sixth configuration message indicates the user equipment to add an SCG.

With reference to possible implementations of the fourth aspect, in a tenth possible implementation of the fourth aspect, the SCG configuration mode is the releasing an SCG, and the transceiver unit is further configured to send a seventh configuration message to the user equipment. The seventh configuration message indicates the user equipment to release an SCG.

According to a fifth aspect, a communication apparatus is provided. The apparatus includes a processor, configured to execute a computer program stored in a memory, to enable the communication apparatus to perform the method in any one of the first to the tenth possible implementations of the first aspect, or perform the method in any one of the first to the tenth possible implementations of the second aspect.

According to a sixth aspect, a computer-readable storage medium is provided. The computer-readable storage medium stores a computer program. When the computer program is run on a computer, the computer is enabled to perform the method in any one of the first to tenth possible implementations of the first aspect, or perform the method in any one of the first to tenth possible implementations of the second aspect.

According to a seventh aspect, a circuit system is provided. The circuit system includes a processor, configured to invoke a computer program from a memory and run the computer program, to enable a communication device in which the circuit system is installed to perform the method in any one of the first to the tenth possible implementations of the first aspect, or perform the method in any one of the first to the tenth possible implementations of the second aspect.

According to an eighth aspect, a communication system is provided, including the apparatus according to the third aspect and the apparatus according to the fourth aspect.

### BRIEF DESCRIPTION OF DRAWINGS

FIG. 1 is a schematic diagram of a scenario according to an embodiment of this application;
FIG. 2 is a schematic diagram of another scenario according to an embodiment of this application;
FIG. 3 is a schematic flowchart of a method for configuring a secondary cell group according to an embodiment of this application;
FIG. 4 is a schematic flowchart of not adding an SCG within a specified time range according to an embodiment of this application;
FIG. 5 is a schematic flowchart of adding an SCG after release according to an embodiment of this application;
FIG. 6 is a schematic flowchart of adding an SCG according to an embodiment of this application;
FIG. 7 is a schematic flowchart of releasing an SCG according to an embodiment of this application;
FIG. 8 is a schematic block diagram of an apparatus according to an embodiment of this application;
FIG. 9 is a schematic block diagram of another apparatus according to an embodiment of this application;
FIG. 10 is a schematic block diagram of another apparatus according to an embodiment of this application;
FIG. 11 is a schematic block diagram of another apparatus according to an embodiment of this application; and
FIG. 12 is a schematic diagram of a structure of user equipment according to an embodiment of this application.

### DESCRIPTION OF EMBODIMENTS

The following describes technical solutions of this application with reference to accompanying drawings.

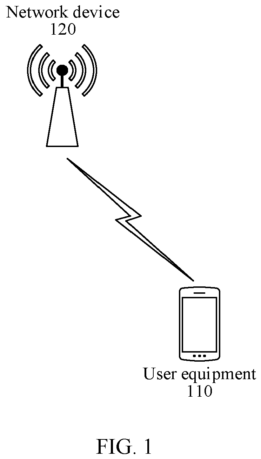

FIG. 1 shows a single connectivity communication system 100 to which an embodiment of this application is applied. The communication system 100 includes a network device 110 and a user equipment 120, and the user equipment 120 is connected only to the network device 110.

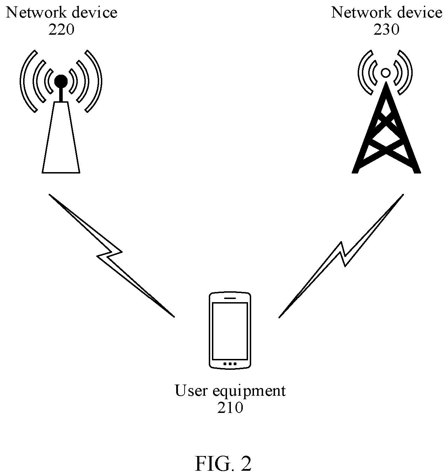

FIG. 2 shows a dual connectivity communication system 200 to which an embodiment of this application is applied. The communication system includes user equipment and at least two network devices. User equipment 210 is connected to both a network device 220 and a network device 230. The network device 220 may serve as an MCG, and the network device 230 may serve as an SCG. Alternatively, the network device 220 serves as an SCG, and the network device 230 serves as an MCG. Details are not described herein. It may be understood that dual connectivity means that two network devices both serve same user equipment, and single connectivity means that only one network device serves same user equipment.

It may be understood that the technical solutions in embodiments of this application can be applied to various communication systems, for example, a global system for mobile communication (global system for mobile communication, GSM), a code division multiple access (code division multiple access, CDMA) system, a wideband code division multiple access (wideband code division multiple access, WCDMA) system, a general packet radio service (general packet radio service, GPRS) system, a long-term evolution (long-term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5th generation (5th generation, 5G) system, a new radio (new radio, NR) system, or a future evolved wireless communication system.

It may be understood that user equipment (user equipment, UE) in embodiments of this application may be an access terminal, a subscriber unit, a subscriber station, a mobile station, a mobile console, a remote station, a remote terminal, a mobile device, a user terminal, a terminal, a wireless communication device, a user agent, or a user apparatus. The user equipment may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, an in-vehicle device, a wearable device, user equipment in a 5G network, user equipment in a future evolved public land mobile network (public land mobile network, PLMN), or the like. This is not limited in embodiments of this application.

It may be understood that the network device in embodiments of this application may be a device configured to communicate with user equipment. The network device may be a base transceiver station (base transceiver station, BTS) in a global system for mobile communication (global system for mobile communication, GSM) or a code division multiple access (code division multiple access, CDMA) system, or may be a NodeB (NodeB, NB) in a wideband code division multiple access (wideband code division multiple access, WCDMA) system, or may be an evolved NodeB (evolved NodeB, eNB or eNodeB) in an LTE system, or may be a radio controller in a cloud radio access network (cloud radio access network, CRAN) scenario. Alternatively, the network device may be a relay station, an access point, an in-vehicle device, a wearable device, a network device in a 5G network, a network device in a future evolved PLMN network, or the like. This is not limited in embodiments of this application.

It may be understood that, dual connectivity may be that a base station in an LTE system serves as an MCG and a base station in an NR system serves as an SCG, or a base station in an LTE system serves as an SCG and a base station in an NR system serves as an MCG, or one base station in an NR system serves as an MCG and another base station in the NR system serves as an SCG. This is not excessively limited herein. Embodiments of this application are described using dual connectivity in which a base station in an LTE system serves as an MCG and a base station in an NR system serves as an SCG as an example.

When a configuration parameter exception occurs in an SCG configuration process, the UE notifies the MCG of an SCG exception, and the MCG is triggered to notify a network device of the SCG exception through reestablishment. The network device determines, based on a measurement report from the UE, whether to configure an SCG again, or the network device itself determines to configure an SCG for the UE. If a same SCG cell is configured again, an SCG exception may be caused to a large extent; and consequently, the SCG connected to the UE cannot operate normally. It may be noted whether to perform configuration again is determined by the network device. In this case, the MCG notifies, through reestablishment, the network device of the SCG exception, and all reported cause values are configuration failures. Therefore, the network device cannot distinguish the exception is an SCG exception or an MCG exception.

When the UE and the network device are in a dual connectivity state, and an SCG internal exception occurs, the UE notifies the MCG of a specific cause value through the SCG, and the MCG then notifies the network device of an SCG failure message (SCGFailureInformationNR) over an air interface. The network device performs different processing depending on a cause value reported by the UE, and may configure SCG release or configure SCG replacement depending on a specific implementation of the network device. If the network device reconfigures the SCG, but the SCG internal exception is not eliminated, the UE is always in a state of reconfiguration due to a configuration exception, which increases power consumption of the UE.

However, when the UE is in an energy saving scenario, the UE sets reducedB W-UL or reducedB W-DL to 0 in UE assistance information, to implicitly indicate, to the network device, that the UE needs to release the SCG.

Therefore, in a DC scenario, the UE cannot directly notify the network device whether an operation expected by the UE is release or addition. However, in embodiments of this application, one new information element (information element, IE) is added to the UE assistance information, to enable the UE explicitly notifies the network device of a configuration expected by the UE, so that the configuration of the SCG is more effective, accurate, and flexible. In addition, the newly added information element is decoupled from other information elements. A cause value may be dynamically added without affecting use of the other IEs.

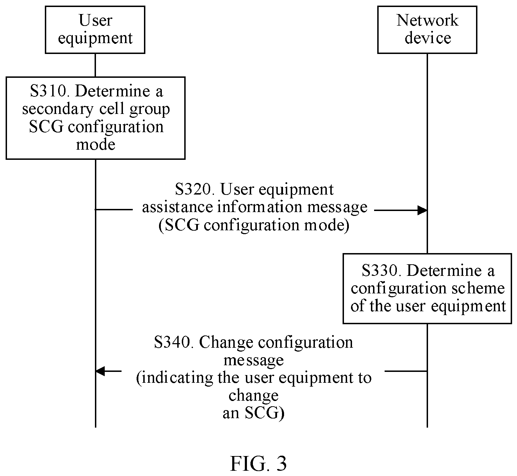

With reference to FIG. 3 to FIG. 7, the following describes in detail a method for configuring a secondary cell group according to embodiments of the present invention.

FIG. 3 is a schematic flowchart of a method for configuring a secondary cell group according to an embodiment of this application. As shown in FIG. 3, the method includes the following steps:
S310. User equipment determines a secondary cell group SCG configuration mode.
S320. The user equipment sends a user equipment assistance information message to a network device, where the user equipment assistance information message includes an information element indicating the SCG configuration mode.
S330. The network device determines a configuration scheme of the user equipment.
S340. The network device sends a change configuration message to the user equipment, where the change configuration message indicates the user equipment to change an SCG.

Specifically, when the UE identifies that the UE is in a single connectivity state and needs to perform a service in a dual connectivity state; or identifies that the UE is in a dual connectivity state and detects that the UE needs to save energy or needs to release the SCG due to excessively high power consumption, the UE sends the user equipment assistance information message to the network device. The user equipment assistance information message (UE assistance information) includes the information element indicating the SCG configuration mode. The SCG configuration mode includes: adding an SCG, releasing an SCG, not adding an SCG within a specified time range, or adding an SCG after release.

It may be understood that the UE assistance information is mainly recommended configurations provided by the UE for the network device, and is mainly for performance optimization. It may be understood that, all configurations of the UE need to be configured by the network device. To be specific, 5G is used as an example. The network device first sends a radio resource control (radio resource control, RRC) reconfiguration message to the UE. OtherConfig in the RRC reconfiguration message is a configuration related to the UE assistance information. The UE triggers a different operation based on the configuration related to the UE assistance information, and reports the UE assistance information corresponding to the operation to the network device. Information elements (information elements, IEs) included in the existing UE assistance information mainly include OtherConfig/OtherConfig-v1540/OtherConfig-v1610/CandidateServingFreqListNR-r16, and the like. Configured functions mainly include a power saving preference of the UE, a performance preference of the UE, a service feature of the UE, a moving speed of the UE, a parameter representing a moving speed of the UE, and the like. For detailed descriptions of the existing UE assistance information, refer to the related protocol in the 3GPP 38.331.

However, in this embodiment of this application, one new information element is added to the UE assistance information. The information element indicates the SCG configuration mode and a specific addition mode may be as follows:

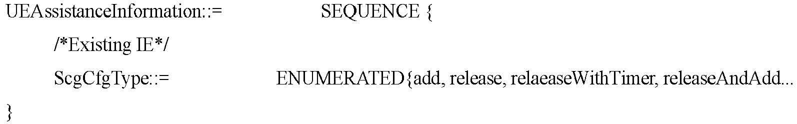

It may be understood that the foregoing newly added information element "ScgCfgType" is merely an example for description in this application, provided that the SCG configuration mode indicated by the information element can be represented. This is not excessively limited in this embodiment of this application. Likewise, "add" represents that the SCG configuration mode indicated by the information element is adding an SCG, "release" represents that the SCG configuration mode indicated by the information element is releasing an SCG, "releaseWithTimer" represents that the SCG configuration mode indicated by the information element is not adding an SCG within a specified time range, and "releaseAndAdd" represents that the SCG configuration mode indicated by the information element is adding an SCG after release. The foregoing "add", "release", "releaseWithTimer", and "releaseAndAdd" are also examples for description in this application, and all fall within the protection scope of embodiments of this application provided that the foregoing "add", "release", "releaseWithTimer", and "releaseAndAdd" can represent differentiation and represent the foregoing various confirmation modes. Details are not described herein again.

For example, after determining the SCG configuration mode, the UE sends the user equipment assistance information message to the network device. The UE assistance information message includes a specific SCG configuration mode determined by the UE. In this case, the network device learns, based on the UE assistance information message received by the UE, the SCG configuration mode expected by the UE, determines an SCG configuration scheme for the UE, and sends a change configuration message to the UE. The change configuration message indicates the UE to change the SCG.

In an implementation, when the UE is in the single connectivity state, and identifies that the UE needs to perform a service in the dual connectivity state, the UE sends the UE assistance information message to the network device. The information element included in the UE assistance information message indicates to add an SCG. After receiving the UE assistance information message, the network device learns that the UE suggests adding the SCG. In this case, the network device determines that the UE is indeed in the single connectivity state, determines, based on the UE assistance information sent by the network device, a configuration scheme of adding the SCG for the UE, and sends a configuration message to the UE. The configuration message indicates the UE to add the SCG.

In an implementation, when the UE is in the dual connectivity state, and identifies that the SCG needs to be released when power consumption of the UE is excessively high or a resource conflict occurs, the UE sends the UE assistance information message to the network device. The information element included in the UE assistance information message indicates to release an SCG. After receiving the UE assistance information message, the network device learns that the UE suggests releasing the SCG. In this case, the network device determines that the UE is indeed in the dual connectivity state, and determines, based on the UE assistance information sent by the network device, a configuration scheme of releasing the SCG for the UE, and sends a configuration message to the UE. The configuration message indicates the UE to release the SCG.

In an implementation, when the UE is in the dual connectivity state, and detects that an unrecoverable exception occurs in a currently connected SCG, but the UE still needs to perform a service in the dual connectivity state, the UE sends the UE assistance information message to the network device. The information element included in the UE assistance information message indicates to add an SCG after release or perform release within a specified time. After receiving the UE assistance information message, the network device learns that the UE suggests first releasing an SCG and then adding an SCG or not adding an SCG within a specific time period. In this case, if the network device determines that the UE is indeed in the dual connectivity state, the network device determines, for the UE based on the UE assistance information sent by the network device, a configuration scheme of adding the SCG after release, and sends the configuration message to the UE. The configuration message indicates the UE to add the SCG after release or not to add the SCG within the specified time range.

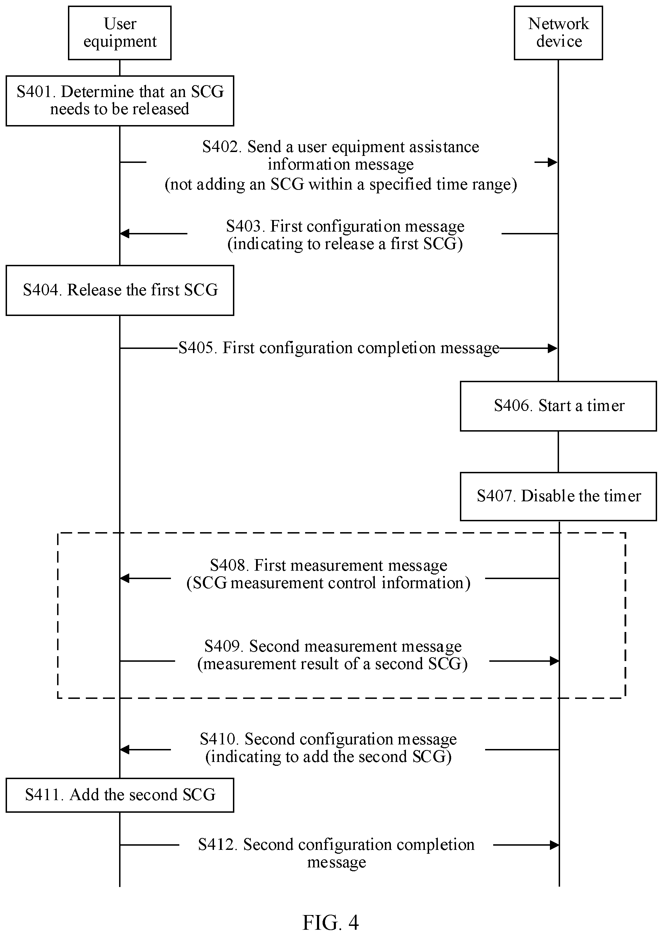

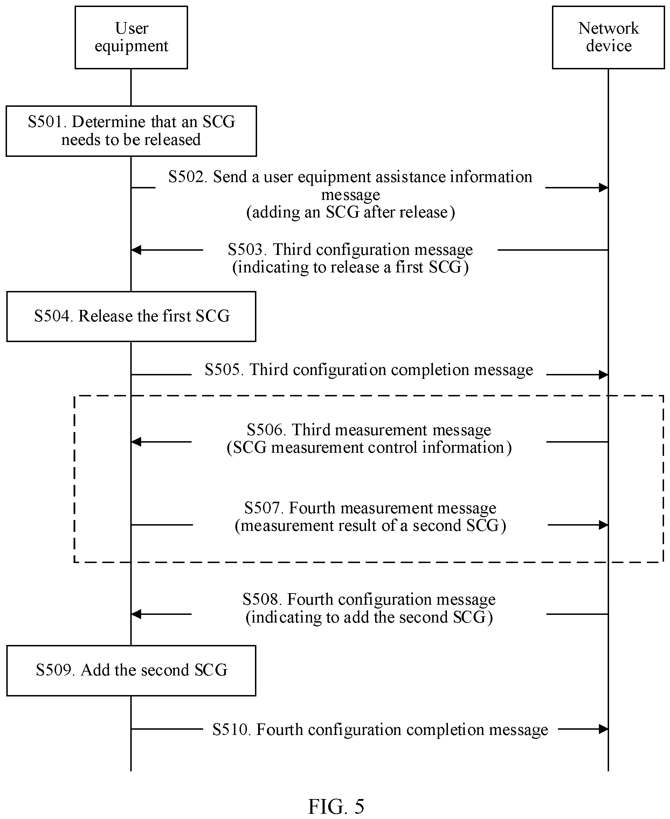

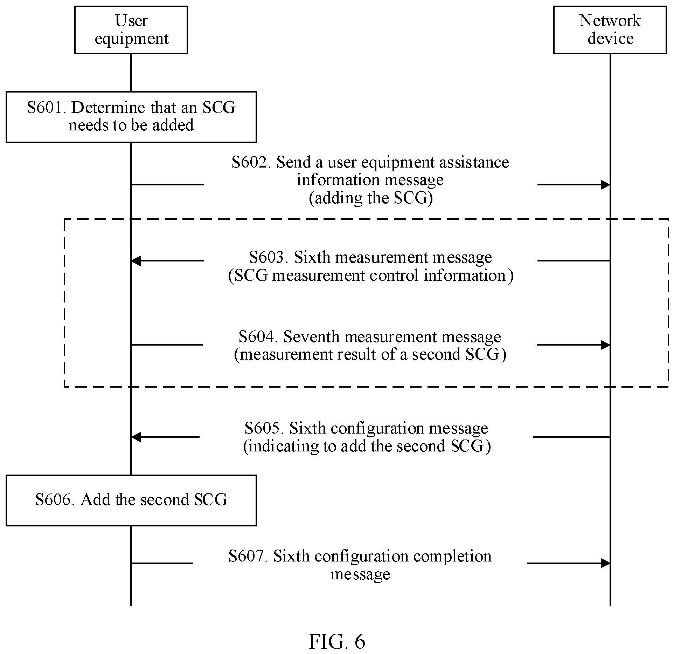

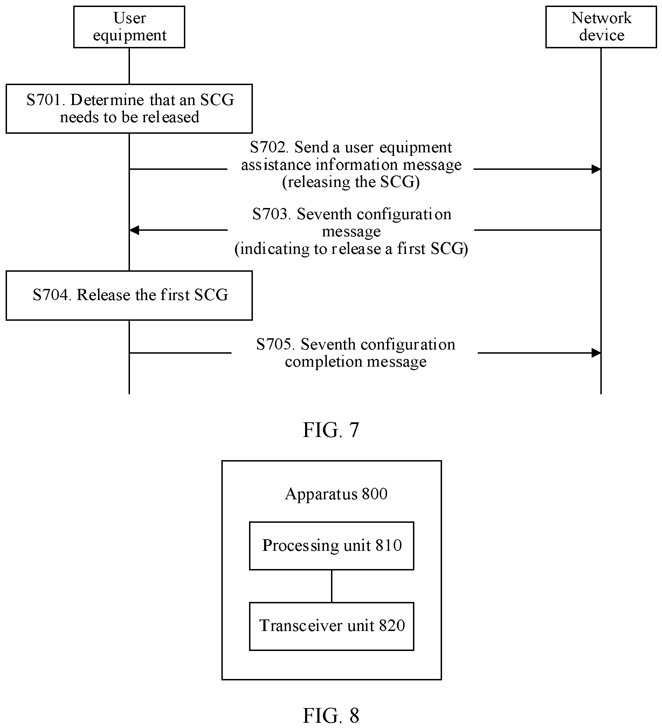

It may be understood that the change configuration message in this embodiment of this application is merely an example instead of a limitation; and may be a first configuration message and a second configuration message in FIG. 4, a third configuration message and a fourth configuration message in FIG. 5, a sixth configuration message in FIG. 6, a seventh configuration message in FIG. 7, or the like. In other words, the change configuration message in this embodiment of this application may represent a message used by the network device to indicate the UE to change the SCG. This application does not exclude that another name is defined in a future protocol to represent a same or similar meaning.

Therefore, after determining the configuration mode of the SCG, the UE sends the user equipment assistance information message to the network device. A new information element is added to the user equipment assistance information message, so that the UE explicitly notifies the network device of a configuration expected by the UE, and the configuration of the SCG is more effective, accurate, and flexible. In addition, the newly added information element is decoupled from other information elements. A cause value may be dynamically added without affecting applicability of the other information elements.

FIG. 4 is a schematic flowchart of not adding an SCG within a specified time range according to an embodiment of this application. It may be understood that this embodiment of this application is described using dual connectivity in which a base station in an LTE system serves as an MCG and a base station in an NR system serves as an SCG as an example. As shown in FIG. 4, the method includes the following steps.

S401. User equipment determines that an SCG needs to be released.

S402. The user equipment sends user equipment assistance information message to a network device.

Specifically, that the UE determines that the SCG needs to be released may be that the UE needs to release the SCG when the UE detects that the UE currently does not need to perform a service on an NR connection, or when the UE is in a dual connectivity state, and there is no service on an NR connection, or when an unrecoverable exception occurs in a currently connected SCG cell, or when power consumption of the UE needs to be reduced, or due to other reasons such as overheating of the UE. Therefore, the UE sends the UE assistance information message to the network device. The assistance information message carries an information element indicating not to add an SCG within a specified time range. In addition, the UE assistance information message further carries a first time range, and the first time range indicates not to add an SCG in the first time range.

For example, a cause value of the information element in the user equipment assistance information message reported by the UE to the network device is 1, for example, ScgCfgType= 1, where 1 indicates not to add an SCG in the first time range. It may be understood that ScgCfgType herein represents an SCG configuration type, or the SCG configuration type may be represented by others. Similarly, the cause value may be any value. For example, the cause value may be releaseWithTimer. This is not further limited herein.

S403. The network device sends a first configuration message to the user equipment.

S404. The user equipment releases a first SCG.

S405. The user equipment sends a first configuration completion message to the network device.

Specifically, after receiving the UE assistance information message from the UE, the network device determines that the UE expects to release the current first SCG and not to add a new SCG within a period of time, and sends the first configuration message to the UE. The first configuration message indicates the UE to release the first SCG.

Optionally, the first configuration message may be an RRC reconfiguration message.

It may be understood that the first configuration message may include indication information. After receiving the first configuration message, the user equipment releases the currently connected first SCG based on the indication information in the first configuration message.

It may be understood that the indication information herein may directly include information of "releasing the first SCG". Alternatively, the indication information itself may not directly include information of "releasing the first SCG", but a function of the indication information or information carried in the indication information is directly or indirectly indicating/representing "releasing the first SCG".

Optionally, the indication information may be RRC connection reconfiguration (RRCConnectionReconfiguration) information, for example, may be RRCConnectionReconfiguration-vl510-IEs.

After releasing the first SCG, the UE sends the first configuration completion message to the network device. The message notifies the network device that the UE has released the first SCG. In this case, single connectivity is formed between the UE and the network, in other words, the UE resides on the LTE.

Optionally, the first configuration completion message may be an RRC reconfiguration completion message.

Optionally, when the network device receives the UE assistance information message from the UE, but the network device is abnormal, the network device may not send the first configuration message to the UE, in other words, the UE is still in the dual connectivity state. To be specific, whether the network device sends the first configuration message to the UE to indicate the UE to release the first SCG is also determined by the network device.

S406. The network device starts a timer.

Specifically, after the network device receives the first configuration completion message from the UE, the network device starts the timer TIMER. It may be understood that timing duration of the timer is the first time range in the UE assistance information message. During running of the timer, in other words, when time is still within the first time range, if the UE reports measurement information related to SCG addition to the network device, the network device ignores the message, in other words, does not add the SCG for the UE. Optionally, during the running of the timer, the UE may not report measurement information related to SCG addition to the network device. In this case, the UE is in an SCG release state, in other words, maintain a single connectivity state.

S407. The network device disables the timer.

After the timing duration of the timer exceeds the first time range, the network device disables the timer, and then the network device may determine, by itself, whether to add an SCG.

For example, the time set by the timer is 5 minutes. Within the 5 minutes, regardless of whether the UE reports a fifth measurement message related to SCG addition to the network device, the UE and the network device always maintain the single connectivity state. However, after the 5 minutes exceeds, the network device may determine, by itself, whether to add an SCG for the UE.

Optionally, when the network device determines to add an SCG for the UE, the following steps are included:
S410. The network device sends a second configuration message to the user equipment.
S411. The user equipment adds a second SCG.
S412. The user equipment sends a second configuration completion message to the network device.

Specifically, after the network device disables the timer, and if the network device supports dual connectivity, the network device may send the second configuration message to the UE. The second configuration message carries a configuration parameter of the second SCG. Indication information included in the second configuration message may indicate the UE to add the second SCG. After receiving the second configuration message from the network device, the UE adds the second SCG based on the indication information in the second configuration message and the configuration parameter of the second SCG. After adding the second SCG, the UE sends the second configuration completion message to the network device. In this case, the UE and the network device restore dual connectivity.

Optionally, the second configuration message may be an RRC reconfiguration message.

Optionally, the second configuration completion message may be an RRC reconfiguration completion message.

It may be understood that the indication information herein may directly include information of "adding the second SCG". Alternatively, the indication information itself may not directly include information of "adding the second SCG", but a function of the indication information or information carried in the indication information is directly or indirectly indicating/representing "adding the second SCG".

Optionally, the indication information may be RRCConnectionReconfiguration information, for example, may be RRCConnectionReconfiguration-v 1510-IEs.

Optionally, before the network device sends the second configuration message to the user equipment, the following steps are included:
S408. The network device sends a first measurement message to the user equipment.
S409. The user equipment sends a second measurement message to the network device.

Specifically, after the network device disables the timer, and if the network device supports dual connectivity, the network device first determines one or more SCGs that can be connected to the UE, and then notifies, through the first measurement message, the UE of related measurement information of an SCG that is in the one or more SCGs and that can be used as a second SCG.

Optionally, the first measurement message may be an RRC reconfiguration message.

It may be understood that the first measurement message carries a B1 event. The B1 event indicates related measurement information of the SCG, that is, measurement control information. The measurement control information includes information about a cell that can be used as an SCG cell and a threshold. The threshold is for notifying the UE that when the SCG cell measured by the UE reaches a specific threshold, the UE may report a UE measurement result to the network device. After receiving the first measurement message from the network device, the UE measures, based on the measurement control information carried in the first measurement message, the SCG provided by the network device, and reports a measurement result to the network device. That is, the user equipment sends the second measurement message to the network device. The second measurement message carries the second SCG measurement result.

Optionally, the second measurement message may be an RRC reconfiguration completion message.

It may be understood that in the foregoing steps S408 and S409, the network device adds the second SCG based on the related measurement information reported by the user equipment. In an optional solution, the network device directly sends, to the UE through the second configuration message, a configuration parameter of the second SCG that the network device considers may serve as an SCG cell.

It may be understood that, when the network device detects that there is no cell that can serve as an SCG around the UE, or the network device does not support dual connectivity, or the network device is abnormal, the network device does not send the second configuration message to the UE, that is, the UE is in the single connectivity state.

In this embodiment of this application, the UE sends the UE assistance information message to the network device. The UE assistance information message includes an information element indicating not to add an SCG within a specified time range. On the one hand, the SCG can be quickly, effectively, accurately, and flexibly configured, to modify the SCG. On the other hand, the SCG is decoupled from other information elements, a cause value may be dynamically added, and applicability of the other IEs is not affected when no SCG is added within a specified time range.

FIG. 5 is a schematic flowchart of adding an SCG after release according to an embodiment of this application. It may be understood that this embodiment of this application is described using dual connectivity in which a base station in an LTE system serves as an MCG and a base station in an NR system serves as an SCG as an example. As shown in FIG. 5, the method includes the following steps.

S501. User equipment determines that an SCG needs to be released.

S502. The user equipment sends user equipment assistance information to a network device.

Specifically, when the UE is in a dual connectivity state, the UE detects that an unrecoverable exception occurs in a current SCG cell, but the UE needs to perform a service in the dual connectivity state. In this case, the UE determines that the UE needs to release a currently connected SCG and add a new SCG. Therefore, the UE sends a UE assistance information message to the network device. The assistance information message carries an information element indicating to add an SCG after release, that is, the UE requests the network device to release the current SCG and add a new SCG.

For example, a cause value of the information element in the user equipment assistance information reported by the UE to the network device is 2, for example, ScgCfgType=2, where 2 indicates to add an SCG after release. It may be understood that ScgCfgType herein indicates an SCG configuration type, or the SCG configuration type may be represented by others. Similarly, the cause value may be any value. For example, the cause value may be releaseAndAdd. This is not further limited herein.

S503. The network device sends a third configuration message to the user equipment.

S504. The user equipment releases a first SCG.

S505. The user equipment sends a third configuration completion message to the network device.

Specifically, after the network device receives the UE assistance information message sent by the UE, the network device determines that the UE expects to first release the currently connected first SCG and add a new SCG. Then, if the network device determines that the UE is in the dual connectivity state, the network device may send the third configuration message to the UE. Third configuration message indicates the UE to release the SCG.

Optionally, the third configuration message may be an RRC reconfiguration message.

It may be understood that the third configuration message may include indication information. After receiving the third configuration message, the UE releases the currently connected first SCG based on the indication information in the third configuration message.

It may be understood that the indication information herein may directly include information of "releasing the first SCG". Alternatively, the indication information itself may not directly include information of "releasing the first SCG", but a function of the indication information or information carried in the indication information is directly or indirectly indicating/representing "releasing the first SCG".

Optionally, the indication information may be RRCConnectionReconfiguration information, for example, may be RRCConnectionReconfiguration-v1510-IEs.

After releasing the first SCG, the UE sends the third configuration completion message to the network device. The message notifies the network device that the UE has released the first SCG. In this case, single connectivity is formed between the UE and the network device, to be specific, the UE resides on the LTE.

Optionally, the third configuration completion message may be an RRC reconfiguration completion message.

Optionally, after the network device receives the UE assistance information message from the UE, the following operations may be performed.

In an optional example, the method further includes:
S508. The network device sends a fourth configuration message to the UE.
S509. The user equipment adds a second SCG.
S510. The user equipment sends a fourth configuration completion message to the network device.

Specifically, when the network device supports dual connectivity, the network device may send the fourth configuration message to the UE. The fourth configuration message carries a configuration parameter of the second SCG. Indication information included in the fourth configuration message indicates the UE to add the second SCG. After receiving the fourth configuration message from the network device, the UE adds the second SCG based on the indication information in the fourth configuration message and the configuration parameter of the second SCG. After adding the second SCG, the UE sends the fourth configuration completion message to the network device. In this case, the UE and the network device restore dual connectivity.

Optionally, the fourth configuration message may be an RRC reconfiguration message.

Optionally, the fourth configuration completion message may be an RRC reconfiguration completion message.

It may be understood that the indication information herein may directly include information of "adding the second SCG". Alternatively, the indication information itself may not directly include information of "adding the second SCG", but a function of the indication information or information carried in the indication information is directly or indirectly indicating/representing "adding the second SCG".

Optionally, the indication information may be RRCConnectionReconfiguration information, for example, may be RRCConnectionReconfiguration-v1510-IEs.

It may be understood that the foregoing first SCG and the foregoing second SCG are different cells. That is, when the network device receives the UE assistance information message from the UE, where the message includes an information element indicating to add an SCG after release, the network device may indicate the UE to release the first SCG, and indicate the UE to add the second SCG. In this case, the network device selects an SCG other than the first SCG as the second SCG.

Similarly, in another embodiment of this application, before the network device sends the fourth configuration message to the user equipment, the following steps are included:
S506. The network device sends a third measurement message to the user equipment.
S507. The user equipment sends a fourth measurement message to the network device.

For example, for specific implementations of step S506 and step S507, refer to step S408 and step S409. Details are not described herein again.

It may be understood that, in the foregoing steps S506 and S507, the network device adds the second SCG based on the related measurement information reported by the user equipment. In an optional solution, the network device directly sends, to the UE through the fourth configuration message, a configuration parameter of the second SCG that the network device considers may serve as an SCG cell. In other words, the network device may blindly add the SCG.

It may be understood that in the foregoing embodiment, the third configuration message and the fourth configuration message may be triggered by an MCG cell.

In an optional embodiment, when the network device detects that there is no connectible SCG cell around the UE, or when the network device is abnormal, the network device does not add an SCG for the UE, that is, the network device does not send the fourth configuration message to the UE. In this case, the UE and the network device maintain a single connectivity state.

In an optional embodiment, if the first SCG and the second SCG may interact with each other, that is, some configurations of the first SCG are applicable in the second SCG, the network device is directly handed over from the first SCG to the second SCG.

It may be noted that, in this case, in S502, the user equipment sends the UE assistance information message to the network device. The message carries an information element indicating resynchronization information instead of an information element indicating to add an SCG after release. The resynchronization information may be Reconfigwith sync. After receiving the message, the network device sends a fifth configuration message to the UE. The fifth configuration message carries indication information. The indication information indicates an SCG handover, that is, a handover from a first SCG cell to a second SCG cell.

After receiving the configuration message, the UE may be handed over from the first SCG to the second SCG.

In an optional embodiment, if the first SCG and the second SCG cannot interact with each other, or there is another scenario in which the network device needs to perform addition after release, for example, when the second SCG cannot reuse the configurations of the first SCG, the network device needs to send a related configuration parameter of the second SCG to the UE. That is, the network device sends the fifth configuration message to the UE. The fifth configuration message carries indication information for releasing the first SCG and adding the second SCG and a configuration parameter of the second SCG. In this case, after receiving the configuration message, the UE first releases the currently connected first SCG, and adds the second SCG based on the configuration parameter of the second SCG.

Optionally, the fifth configuration message may further carry a fullConfig flag bit. In this case, the fifth configuration message does not carry indication information indicating to release the first SCG and add the second SCG. In other words, the fifth configuration message carries fullCongfig and the configuration parameter of the second SCG. When receiving the fifth configuration message, the UE may release the first SCG and add the second SCG. In other words, fullConfig herein serves as implicit indication information to indirectly indicate the UE to add an SCG after release.

It may be understood that the indication information herein may directly include information of "releasing the first SCG and adding the second SCG". Alternatively, the indication information itself may not directly include information of "releasing the first SCG and adding the second SCG", but a function of the indication information or information carried in the indication information is directly or indirectly indicating/representing "releasing the first SCG and adding the second SCG".

Optionally, the indication information may be RRCConnectionReconfiguration information, for example, may be RRCConnectionReconfiguration-v1510-IEs.

It may be understood that the first SCG is different from the second SCG.

It may be understood that, in FIG. 5, several possible operations performed by the network device after the network device receives the UE assistance information message from the UE are merely illustrative in this embodiment of this application, and there are some other operations that the network device considers may be performed. Details are not described herein again.

In this embodiment of this application, the UE sends the UE assistance information message to the network device. The UE assistance information message includes an information element indicating to add an SCG after release. On the one hand, the SCG can be quickly, effectively, accurately, and flexibly configured, to modify the SCG. On the other hand, the SCG is decoupled from information elements, a cause value may be dynamically added, and applicability of the other IEs is not affected when an SCG is added after release.

FIG. 6 is a schematic flowchart of adding an SCG according to an embodiment of this application. It may be understood that this embodiment of this application is described using dual connectivity in which a base station in an LTE system serves as an MCG and a base station in an NR system serves as an SCG as an example. As shown in FIG. 6, the method includes the following steps.

S601. User equipment determines that an SCG needs to be added.

S602. The user equipment sends user equipment assistance information to a network device.

Specifically, that the UE is in a single connectivity state may be that when a configuration parameter of an SCG is abnormal, after the UE releases the SCG, single connectivity is formed between the UE and the network device and resides on the LTE. Alternatively, that the UE is in a single connectivity state may be a case that the UE intends to establish dual connectivity with the network device, but only single connectivity is established between the UE and the network device. It may be understood that this embodiment of this application is always applicable provided that the UE is in the single connectivity state. Details are not described herein again.

It may be understood that, that the UE determines that an SCG needs to be added may be that the UE is currently connected to only the LTE, but needs to perform a service under dual connectivity. For example, the UE needs to improve performance of the UE through the SCG, and therefore, the dual connectivity needs to be established. It may be understood that this embodiment of this application is always applicable provided that the UE needs to perform dual connectivity. This is not excessively limited herein.

Therefore, the UE sends the UE assistance information message to the network device. The assistance information message carries an information element indicating to add an SCG, that is, the UE requests the network device to add the SCG.

For example, a cause value of the information element in the user equipment assistance information message reported by the UE to the network device is 3, for example, ScgCfgType=3, where 3 indicates to add an SCG. It may be understood that ScgCfgType herein represents an SCG configuration type, or the SCG configuration type may be represented by others. Similarly, the cause value may be any value. For example, the cause value may be add. This is not further limited herein.

After the network device receives the UE assistance information message from the UE, the UE may perform the following operations.

Optionally, in S603, the network device sends a sixth measurement message to the user equipment.

S604. The user equipment sends a seventh measurement message to the network device.

Specifically, when the network device receives the UE assistance information message and knows that the UE expects to add an SCG, the network device first determines one or more SCGs that can be connected to the UE, and then notifies, through the sixth measurement message, the UE of related measurement information of an SCG that is in the one or more SCGs and that can be used as the second SCG. The UE measures the SCG based on the sixth measurement message, and sends a measurement result to the network device through the seventh measurement message.

Optionally, the sixth measurement message may be an RRC reconfiguration message.

Optionally, the seventh measurement message may be an RRC reconfiguration completion message.

For example, for specific operation processes of step S603 and step S604, refer to step S408 and step S409. Details are not described herein again.

S605. The network device sends a sixth configuration message to the user equipment.

S606. The user equipment adds a second SCG.

S607. The user equipment sends a sixth configuration completion message to the network device.

Specifically, after the network device receives, from the UE, the seventh measurement message that carries the measurement result of the second SCG, the network device sends the sixth configuration message to the UE. The sixth configuration message carries a configuration parameter of the second SCG and an indication message for indicating to add the second SCG. The UE adds the second SCG based on the sixth configuration message sent by the network device. After adding the second SCG, the UE sends the sixth configuration completion message to the network device. The message notifies the network device that the UE has added the second SCG. In this case, dual connectivity is formed between the UE and the network device.

Optionally, after S601 is performed, S605 may be directly performed. That is, when the network device receives the UE assistance information from the UE, the network device may not configure SCG-related measurement, and instead, directly send, to the UE, a configuration parameter of a second SCG that the network device considers may serve as the SCG. In this case, the UE adds the second SCG based on the configuration parameter of the second SCG provided by the network device. To be specific, the network device may blindly add the SCG.

Optionally, after S602 is performed, it is acceptable to perform none of steps S603 to S607, that is, the network device does not indicate the user equipment to add an SCG. To be specific, the network device does not perform any action after receiving the UE assistance information message. In this case, the user equipment is still in the single connectivity state. One reason may be that no cell around the network device may be used as the SCG of the UE.

It may be understood that in the foregoing steps, whether the network device sends the sixth measurement message to the user equipment or whether the network device sends the sixth configuration message to the user equipment is determined by the network device itself.

In this embodiment of this application, the UE sends the UE assistance information message to the network device. The UE assistance information message includes an information element indicating to add an SCG. On the one hand, the SCG can be quickly, effectively, and accurately configured, to modify the SCG. On the other hand, the SCG is decoupled from other information elements, a cause value may be dynamically added, and applicability of the other IEs is not affected when an SCG is added.

FIG. 7 is a schematic flowchart of releasing an SCG according to an embodiment of this application. It may be understood that this embodiment of this application is described using dual connectivity in which a base station in an LTE system serves as an MCG and a base station in an NR system serves as an SCG as an example. As shown in FIG. 7, when the UE is in dual connectivity, the method includes the following steps.

S701. User equipment determines that an SCG needs to be released.

S702. The user equipment sends user equipment assistance information to a network device.

Specifically, that the UE determines that the SCG needs to be released may be that the UE needs to release the SCG when the UE detects that the UE currently does not need to perform a service on an NR connection, or when the UE is under dual connectivity, and there is no service on an NR connection, or when power consumption of the UE needs to be reduced, or due to other reasons such as overheating of the UE. Therefore, the UE sends a UE assistance information message to the network device. The assistance information message carries an information element indicating to release an SCG.

For example, a cause value of the information element in the user equipment assistance information message reported by the UE to the network device is 4, for example, ScgCfgType=4, where 4 indicates to release an SCG. It may be understood that ScgCfgType herein represents an SCG configuration type, or the SCG configuration type may be represented by others. Similarly, the cause value may be any value. For example, the cause value may be release. This is not further limited herein.

S703. The network device sends a seventh configuration message to the user equipment.

S704. The user equipment releases a first SCG.

S705. The user equipment sends a seventh configuration completion message to the network device.

It may be understood that, after the network device receives the UE assistance information message from the UE, the network device determines that the UE expects to release a current first SCG and maintain a single connectivity state. In this case, the network device sends a seventh configuration message to the UE. The seventh configuration message carries indication information used to indicate the UE to release the first SCG. After releasing the first SCG, the UE sends a seventh configuration completion message to the network device. The message notifies the network device that the UE has released the first SCG. In this case, single connectivity is formed between the UE and the network, that is, the UE resides on the LTE.

Optionally, after the network device receives the UE assistance information message from the UE, the network device may not send the seventh configuration message to the user equipment, that is, the UE is still in the dual connectivity state. That is, whether the network device sends the seventh configuration message to the user equipment to indicate the user equipment to release an SCG is determined by the network device.

Optionally, the seventh configuration message may be an RRC reconfiguration message.

Optionally, the seventh configuration completion message may be an RRC reconfiguration completion message.

Optionally, in this embodiment of this application, if the UE has released the first SCG, and the UE continues to report measurement information related to SCG addition to the network device, the network device may ignore the measurement information. In other words, the UE and the network device still maintain a single connectivity state, and do not continue to configure an SCG.

Optionally, in this embodiment of this application, the UE has released the SCG, the UE does not report measurement information related to SCG addition, and the UE and the network device still maintain the single connectivity state, and do not continue to configure the SCG anymore.

In this embodiment of this application, the UE sends the UE assistance information message to the network device. The UE assistance information message includes an information element indicating to release an SCG. On the one hand, the SCG can be quickly, effectively, and accurately configured, to modify the SCG. On the other hand, the SCG is decoupled from other information elements, a cause value may be dynamically added, and applicability of the other IEs is not affected when an SCG is released.

It may be understood that, in embodiments of this application, the first configuration message and the second configuration message in FIG. 4, the third configuration message and the fourth configuration message in FIG. 5, the sixth configuration message in FIG. 6, and the seventh configuration message in FIG. 7 are defined only for ease of differentiation, and do not constitute any limitation on this application.

FIG. 8 is a schematic block diagram of an apparatus according to an embodiment of this application. As shown in the figure, the apparatus 800 may include a processing unit 810 and a transceiver unit 820.

In a possible design, the apparatus 800 may correspond to the user equipment in the foregoing method embodiments.

Specifically, the apparatus 800 may correspond to the user equipment in FIG. 3, FIG. 4, FIG. 5, FIG. 6, and FIG. 7 according to embodiments of this application. The apparatus may include units configured to perform the method performed by the user equipment in the method in FIG. 3, the method in FIG. 4, the method in FIG. 5, the method in FIG. 6, or the method in FIG. 7. In addition, the units in the apparatus 800 and the foregoing other operations and/or functions are respectively for implementing corresponding procedures of the method in FIG. 3, the method in FIG. 4, the method in FIG. 5, the method in FIG. 6, or the method in FIG. 7.

Specifically, the processing unit 810 is configured to determine a secondary cell group SCG configuration mode. The transceiver unit 820 is configured to send user equipment assistance information message to the network device. The user equipment assistance information message includes an information element indicating the SCG configuration mode. The SCG configuration mode includes adding an SCG, releasing an SCG, not adding an SCG within a specified time range, or adding an SCG after release.

Optionally, the SCG configuration mode is the not adding an SCG within a specified time range, the user equipment assistance information message further includes a first time range, and the first time range indicates not to add an SCG within the first time range.

Optionally, the transceiver unit 820 is further configured to receive first configuration message from the network device. The first configuration message indicates the user equipment to release a first SCG. The user equipment is in a dual connectivity state. The processing unit 810 is configured to release the first SCG based on the first configuration message.

Optionally, the transceiver unit 820 is further configured to receive a first configuration message from the network device. The first configuration message includes a configuration of a second SCG. The first configuration message indicates the user equipment to add the second SCG. The processing unit 810 is further configured to add the second SCG based on the second configuration message.

Optionally, before the user equipment receives the second configuration message from the network device, the transceiver unit 820 is further configured to receive a first measurement message from the network device. The first measurement message carries SCG measurement control information. The processing unit 810 is further configured to measure channel quality of an SCG based on the first measurement message. The transceiver unit 820 is further configured to send a second measurement message to the network device. The second measurement message carries the measurement result of the second SCG.

Optionally, the SCG configuration mode is the adding an SCG after release, and the transceiver unit 820 is further configured to receive a third configuration message from the network device. The third configuration message indicates the user equipment to release a first SCG. The user equipment is in a dual connectivity state. The processing unit 810 is further configured to release the first SCG based on the third configuration message.

Optionally, the transceiver unit 820 is further configured to receive the fourth configuration message from the network device. The fourth configuration message includes a configuration of a second SCG. The fourth configuration message indicates the user equipment to add the second SCG. The second SCG is different from the first SCG. The processing unit 810 is further configured to add the second SCG based on the fourth configuration message.

Optionally, before the user equipment receives the fourth configuration message from the network device, the transceiver unit 820 is further configured to receive a third measurement message from the network device. The third measurement message carries SCG measurement control information. The processing unit 810 is further configured to measure channel quality of an SCG based on the third measurement message. The transceiver unit 820 is further configured to send a fourth measurement message to the network device. The fourth measurement message carries the measurement result of the second SCG.

Optionally, the SCG configuration mode is the adding an SCG after release, and the transceiver unit 820 is further configured to receive a fifth configuration message from the network device. The fifth configuration message further includes a configuration of a second SCG. The fifth configuration message indicates the user equipment to release a first SCG and add the second SCG. The user equipment is in a dual connectivity state. The processing unit 810 is further configured to release the first SCG and add the second SCG based on the fifth configuration message. The second SCG is different from the first SCG.

Optionally, the SCG configuration mode is the adding an SCG, and the transceiver unit 820 is further configured to receive a sixth configuration message from the network device. The sixth configuration message indicates the user equipment to add an SCG. The user equipment is in a single connectivity state. The processing unit 810 is further configured to add the SCG based on the sixth configuration message.

Optionally, the SCG configuration mode is the releasing an SCG, and the transceiver unit 820 is further configured to receive a seventh configuration message from the network device. The seventh configuration message indicates the user equipment to release an SCG. The user equipment is in a dual connectivity state. The processing unit 810 is further configured to release the SCG based on the sixth configuration message.

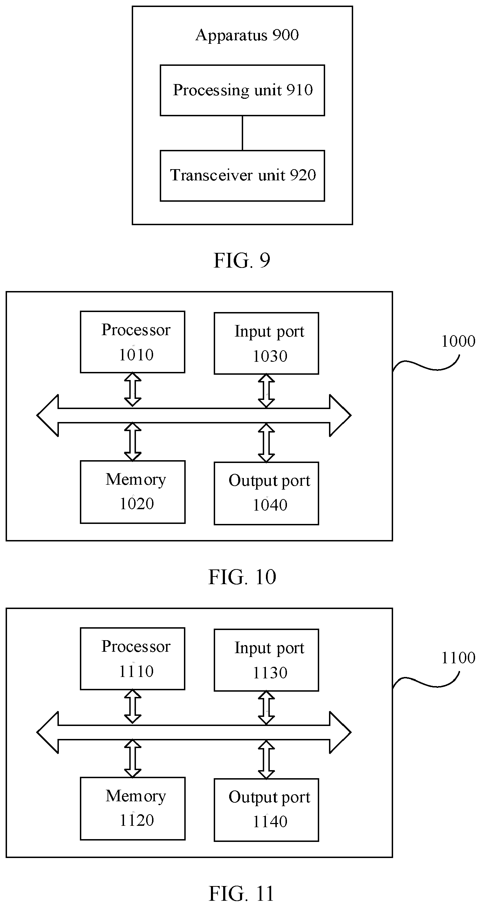

FIG. 9 is a schematic block diagram of an apparatus according to an embodiment of this application. As shown in the figure, the apparatus 900 may include a processing unit 910 and a transceiver unit 920.

In a possible design, the apparatus 900 may correspond to the network device in the foregoing method embodiments.

Specifically, the apparatus 900 may correspond to the network device in FIG. 3, FIG. 4, FIG. 5, FIG. 6, and FIG. 6 according to embodiments of this application. The apparatus may include units configured to perform the method performed by the network device in the method in FIG. 3, the method in FIG. 4, the method in FIG. 5, the method in FIG. 6, or the method in FIG. 7. In addition, the units in the apparatus 900 and the foregoing other operations and/or functions are respectively for implementing corresponding procedures of the method in FIG. 3, the method in FIG. 4, the method in FIG. 5, the method in FIG. 6, or the method in FIG. 7.

Specifically, the transceiver unit 920 is configured to receive a user equipment assistance information message from the user equipment. The user equipment assistance information message includes an information element indicating an SCG configuration mode. The SCG configuration mode includes adding an SCG, releasing an SCG, not adding an SCG within a specified time range, or adding an SCG after release. The processing unit 910 is configured to determine a configuration scheme of the user equipment based on the SCG configuration mode.

Optionally, the SCG configuration mode is the not adding an SCG within a specified time range, the user equipment assistance information message further includes a first time range, and the first time range indicates not to add an SCG within the first time range.

Optionally, the transceiver unit 920 is further configured to send a first configuration message to the user equipment. The first configuration message indicates the user equipment to release a first SCG. The processing unit 910 is further configured to start a timer. Timing duration of the timer is a first time range. The network device ignores a fifth measurement message from the user equipment during running of the timer. The fifth measurement message includes a measurement result of a second SCG. The second SCG is different from the first SCG.

Optionally, the processing unit 910 is further configured to disable the timer. The transceiver unit 920 is further configured to send a second configuration message to the user equipment. The second configuration message includes the configuration of the second SCG. The second configuration message indicates the user equipment to add the second SCG.

Optionally, before the network device sends the second configuration message to the user equipment, the transceiver unit 920 is further configured to send a first measurement message to the user equipment. The first measurement message carries SCG measurement control information. The transceiver unit 920 is further configured to receive a second measurement message from the user equipment. The second measurement message carries the measurement result of the second SCG.

Optionally, the SCG configuration mode is the adding an SCG after release, and the transceiver unit 920 is further configured to send a third configuration message to the user equipment. The third configuration message indicates the user equipment to release a first SCG.

Optionally, the transceiver unit 920 is further configured for the network device to send a fourth configuration message to the user equipment. The fourth configuration message includes a configuration of a second SCG. The fourth configuration message indicates the user equipment to add the second SCG. The second SCG is different from the first SCG.

Optionally, before the network device sends the fourth configuration message to the user equipment, the transceiver unit 920 is further configured to send a third measurement message to the user equipment. The third measurement message carries SCG measurement control information. The transceiver unit 920 is further configured to receive a fourth measurement message from the user equipment. The fourth measurement message carries a measurement result of the second SCG.

Optionally, the SCG configuration mode is the adding an SCG after release, and the transceiver unit 920 is further configured to send a fifth configuration message to the user equipment. The fifth configuration message further includes a configuration of a second SCG. The fifth configuration message indicates the user equipment to release a first SCG and add the second SCG. The second SCG is different from the first SCG.

Optionally, the SCG configuration mode is the adding an SCG, and the transceiver unit 920 is further configured to send a sixth configuration message to the user equipment. The sixth configuration message indicates the user equipment to add an SCG.

Optionally, the SCG configuration mode is the releasing an SCG, and the transceiver unit 920 is further configured to send a seventh configuration message to the user equipment. The seventh configuration message indicates the user equipment to release an SCG.

FIG. 10 is a schematic diagram of an apparatus 1000 according to an embodiment of this application. As shown in FIG. 10, the apparatus 1000 may include a processor 1010 (that is, an example of a processing module) and a memory 1020. The memory 1020 is configured to store instructions, and the processor 1010 is configured to execute the instructions stored in the memory 1020, to enable the apparatus 1000 to implement the steps performed for configuring a cell group in the method corresponding to FIG. 3, FIG. 4, FIG. 5, FIG. 6, or FIG. 7.

Further, the apparatus 1000 may further include an input port 1030 (that is, an example of a receiving unit) and an output port 1040 (that is, an example of a sending unit). Further, the processor 1010, the memory 1020, the input port 1030, and the output port 1050 may communicate with each other through an internal connection path, to transmit a control signal and/or a data signal. The memory 1020 is configured to store a computer program. The processor 1010 may be configured to invoke the computer program from the memory 1020 and run the computer program, to control the input port 1030 to receive a signal, and control the output port 1040 to send a signal, to complete the steps of the user equipment in the foregoing methods. The memory 1020 may be integrated into the processor 1010, or may be separated from the processor 1010.

Optionally, if the apparatus 1000 is a communication device, the input port 1030 is a receiver, and the output port 1040 is a transmitter. The receiver and the transmitter may be a same physical entity or different physical entities. When being a same physical entity, the receiver and the transmitter may be collectively referred to as a transceiver

Optionally, if the apparatus 1000 is a chip or a circuit, the input port 1030 is an input interface, and the output port 1040 is an output interface.

In an implementation, it may be considered that functions of the input port 1030 and the output port 1040 are implemented through a transceiver circuit or a dedicated transceiver chip. It may be considered that the processor 1010 is implemented through a dedicated processing chip, a processing circuit, a processor or a general-purpose chip.

In another implementation, it may be considered that the communication device provided in this embodiment of this application is implemented through a general-purpose computer. That is, program code for implementing the functions of the processor 1010, the input port 1030, and the output port 1040 is stored in the memory 1020, and a general-purpose processor executes the code in the memory 1030 to implement the functions of the processor 1010, the input port 1030, and the output port 1040.

The modules or units in the apparatus 1000 may be configured to perform actions or processes performed by a device (for example, user equipment) for configuring a cell group in the foregoing methods. To avoid repetition, detailed descriptions thereof are omitted herein.

For concepts, explanations, detailed descriptions, and other steps of the apparatus 1010 that are related to the technical solutions and that are provided in this embodiment of this application, refer to the descriptions of the content in the foregoing methods or other embodiments. Details are not described herein again.

According to the foregoing methods, FIG. 11 is a schematic diagram of an apparatus 1100 according to an embodiment of this application. As shown in FIG. 11, the apparatus 1110 may be a device for configuring a cell group, and includes a network element having an access management function, for example, an AMF.

The apparatus 1100 may include a processor 1110 (that is, an example of a processing unit) and a memory 1120. The memory 1120 is configured to store instructions, and the processor 1110 is configured to execute the instructions stored in the memory 1120, to enable the apparatus 1110 to implement the steps performed for configuring a cell group in the method corresponding to FIG. 3, FIG. 4, FIG. 5, FIG. 6, or FIG. 7.

Further, the apparatus 1100 may further include an input port 1130 (that is, an example of a receiving unit) and an output port 1140 (that is, an example of a sending unit). Further, the processor 1110, the memory 1120, the input port 1130, and the output port 1140 may communicate with each other through an internal connection path, to transmit a control signal and/or a data signal. The memory 1120 is configured to store a computer program. The processor 1110 may be configured to invoke the computer program from the memory 1120 and run the computer program, to control the input port 1130 to receive a signal, and control the output port 1140 to send a signal, to complete steps of the network device in the foregoing methods. The memory 1120 may be integrated into the processor 1110, or may be separated from the processor 1110.

Optionally, if the apparatus 1100 is a communication device, the input port 1130 is a receiver, and the output port 1140 is a transmitter. The receiver and the transmitter may be a same physical entity or different physical entities. When being a same physical entity, the receiver and the transmitter may be collectively referred to as a transceiver

Optionally, if the apparatus 1100 is a chip or a circuit, the input port 1130 is an input interface, and the output port 1140 is an output interface.

In an implementation, it may be considered that functions of the input port 1130 and the output port 1140 are implemented through a transceiver circuit or a dedicated transceiver chip. It may be considered that the processor 1110 is implemented through a dedicated processing chip, a processing circuit, a processor, or a general-purpose chip.

In another implementation, it may be considered that the communication device provided in this embodiment of this application is implemented through a general-purpose computer. That is, program code for implementing functions of the processor 1110, the input port 1130, and the output port 1140 is stored in the memory 1120, and a general-purpose processor executes the code in the memory 1120 to implement the functions of the processor 1110, the input port 1130, and the output port 1140.

The modules or units in the apparatus 1100 may be configured to perform actions or processing processes performed by the device (that is, the network device) for configuring a secondary cell group in the foregoing methods. To avoid repetition, detailed descriptions are omitted herein.

For concepts, explanations, detailed description, and other steps of the apparatus 1100 that are related to the technical solutions and that are provided this embodiment of this application, refer to the descriptions of the content in the foregoing methods or other embodiments. Details are not described herein again.

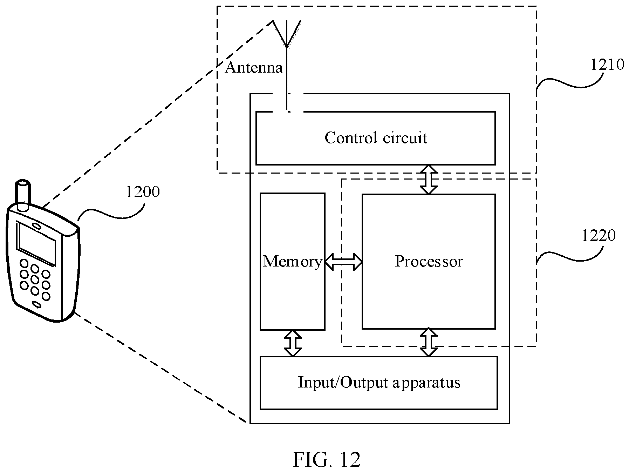

FIG. 12 is a schematic diagram of a structure of user equipment 1200 according to this application. For ease of description, FIG. 12 shows only main components of the user equipment. As shown in FIG. 12, the user equipment 1200 includes a processor, a memory, a control circuit, an antenna, and an input/output apparatus.

The processor is mainly configured to process a communication protocol and communication data, control the entire terminal device, execute a software program, and process data of the software program, for example, is configured to support the terminal device to perform the actions described in the foregoing indication method embodiments for transmitting a precoding matrix. The memory is mainly configured to store the software program and the data, for example, store a codebook described in the foregoing embodiment. The control circuit is mainly configured to convert a baseband signal and a radio frequency signal and process the radio frequency signal. The control circuit and the antenna together may also be referred to as a transceiver, and are mainly configured to send and receive the radio frequency signal in a form of an electromagnetic wave. The input/output apparatus, such as a touchscreen, a display, or a keyboard, is mainly configured to: receive data input by a user and output the data to the user

After the terminal device is powered on, the processor may read the software program in the storage unit, interpret and execute instructions of the software program, and process the data of the software program. When the data needs to be sent in a wireless manner, the processor performs baseband processing on the to-be-sent data, and then outputs the baseband signal to a radio frequency circuit. The radio frequency circuit performs radio frequency processing on the baseband signal, and then sends, through the antenna, the radio frequency signal in an electromagnetic wave form. When the data is sent to the terminal device, the radio frequency circuit receives the radio frequency signal through the antenna, converts the radio frequency signal into the baseband signal, and outputs the baseband signal to the processor. The processor converts the baseband signal into the data, and processes the data.

A person skilled in the art may understand that, for ease of description, FIG. 12 shows only one memory and one processor. In an actual terminal device, there may be a plurality of processors and memories. The memory may also be referred to as a storage medium, a storage device, or the like. This is not limited in embodiments of this application.

In an optional implementation, the processor may include a baseband processor and a central processing unit. The baseband processor is mainly configured to process a communication protocol and communication data. The central processing unit is mainly configured to control the entire terminal device, execute software program, and process data of the software program. Functions of the baseband processor and the central processing unit are integrated into the processor in FIG. 12. A person skilled in the art may understand that the baseband processor and the central processing unit each may be an independent processor, and are interconnected by using a technology such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected through various buses. The baseband processor may alternatively be expressed as a baseband processing circuit or a baseband processing chip. The central processing unit may alternatively be expressed as a central processing circuit or a central processing chip. A function of processing the communication protocol and the communication data may be embedded in the processor, or may be stored in a storage unit in a form of the software program. The processor executes the software program to implement a baseband processing function.

As shown in FIG. 12, the user equipment 1200 includes a transceiver unit 1210 and a processing unit 1220. The transceiver unit may also be referred to as a transceiver, a transceiver machine, a transceiver apparatus, or the like. Optionally, a component that is in the transceiver unit 1210 and that is configured to implement a receiving function may be considered as a receiving unit, and a component that is in the transceiver unit 1210 and that is configured to implement a sending function may be considered as a sending unit. In other words, the transceiver unit 1210 includes the receiving unit and the sending unit. For example, the receiving unit may also be referred to as a receiver, a receiver machine, a receiver circuit, or the like, and the sending unit may be referred to as a transmitter, a transmitter machine, a transmitter circuit, or the like.

The terminal device shown in FIG. 12 may perform actions performed by the user equipment in the foregoing. To avoid repetition, detailed descriptions thereof are omitted herein.

It may be understood that, the processor in this embodiment of this application may be the central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It should also be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of illustrative rather than limitative descriptions, random access memories (random access memories, RAMs) may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The foregoing embodiments may be fully or partly implemented through software, hardware, firmware, or any combination thereof. When the software is used to implement embodiments, the foregoing embodiments may be fully or partly implemented in a form of a computer program product. The computer program product includes one or more computer instructions or computer programs. When the program instructions or the computer programs are loaded and executed on the computer, the procedure or the functions according to this embodiment of this application are fully or partly generated. The computer may be a general-purpose computer, a dedicated computer, a computer network, or other programmable apparatuses. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, infrared, radio, microwave, or the like) manner. The computer-readable storage medium may be any usable medium accessible by a computer, or a data storage device integrating one or more usable media, for example, a server or a data center. The usable medium may be a magnetic medium (for example, a floppy disk, a hard disk, or a magnetic tape), an optical medium (for example, a DVD), or a semiconductor medium. The semiconductor medium may be a solid-state drive.

It may be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

It may be understood that sequence numbers of the foregoing processes do not mean an execution sequence in various embodiments of this application. The execution sequence of the processes may be determined based on functions and internal logic of the processes, and may not be construed as any limitation on the implementation processes of embodiments of this application.

Terminologies such as "component", "module", and "system" used in this specification are used to indicate computer-related entities, hardware, firmware, combinations of hardware and software, software, or software being executed. For example, a component may be, but is not limited to, a process that is run on a processor, a processor, an object, an executable file, an execution thread, a program, and/or a computer As illustrated through figures, both an application run on a computing device and the computing device may be components. One or more components may reside within a process and/or a thread of execution, and a component may be located on one computer and/or distributed between two or more computers. In addition, these components may be executed from various computer-readable media that store various data structures. For example, the components may communicate through a local and/or a remote process and based on, for example, a signal having one or more data packets (for example, data from two components interacting with another component in a local system, a distributed system, and/or across a network such as the Internet interacting with other systems through the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it may not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it may be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that may store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to protection scope of the claims.

## Claims

1. A method for configuring a secondary cell group, comprising:
determining, by user equipment, a secondary cell group SCG configuration mode; and
sending, by the user equipment, a user equipment assistance information message to a network device, wherein the user equipment assistance information message comprises an information element indicating the SCG configuration mode, and the SCG configuration mode comprises adding an SCG, releasing an SCG, not adding an SCG within a specified time range, or adding an SCG after release.

2. The method according to claim 1, wherein the SCG configuration mode is the not adding an SCG within a specified time range, the user equipment assistance information message further comprises a first time range, and the first time range indicates not adding an SCG within the first time range.

3. The method according to claim 2, wherein the method further comprises:
receiving, by the user equipment, a first configuration message from the network device, wherein the first configuration message indicates the user equipment to release a first SCG, and the user equipment is in a dual connectivity state; and
releasing, by the user equipment, the first SCG based on the first configuration message.

4. The method according to claim 3, wherein the method further comprises:
receiving, by the user equipment, a second configuration message from the network device, wherein the second configuration message comprises a configuration of a second SCG, and the second configuration message indicates the user equipment to add the second SCG; and
adding, by the user equipment, the second SCG based on the second configuration message, wherein the second SCG is different from the first SCG.

5. The method according to claim 4, wherein before the receiving, by the user equipment, a second configuration message from the network device, the method further comprises:
receiving, by the user equipment, a first measurement message from the network device, wherein the first measurement message carries SCG measurement control information;
measuring, by the user equipment, channel quality of an SCG based on the first measurement message; and
sending, by the user equipment, a second measurement message to the network device, wherein the second measurement message carries a measurement result of the second SCG.

6. The method according to claim 1, wherein the SCG configuration mode is the adding an SCG after release, and the method further comprises:
receiving, by the user equipment, a third configuration message from the network device, wherein the third configuration message indicates the user equipment to release a first SCG, and the user equipment is in a dual connectivity state; and
releasing, by the user equipment, the first SCG based on the third configuration message.

7. The method according to claim 6, wherein the method further comprises:
receiving, by the user equipment, a fourth configuration message from the network device, wherein the fourth configuration message comprises a configuration of a second SCG, the fourth configuration message indicates the user equipment to add the second SCG, and the second SCG is different from the first SCG; and
adding, by the user equipment, the second SCG based on the fourth configuration message.

8. The method according to claim 7, wherein before the receiving, by the user equipment, a fourth configuration message from the network device, the method further comprises:
receiving, by the user equipment, a third measurement message from the network device, wherein the third measurement message carries SCG measurement control information;
measuring, by the user equipment, channel quality of an SCG based on the third measurement message; and
sending, by the user equipment, a fourth measurement message to the network device, wherein the fourth measurement message carries a measurement result of the second SCG.

9. The method according to claim 1, wherein the SCG configuration mode is the adding an SCG after release, and the method further comprises:
receiving, by the user equipment, a fifth configuration message from the network device, wherein the fifth configuration message further comprises a configuration of a second SCG, the fifth configuration message indicates the user equipment to release a first SCG and add the second SCG, and the user equipment is in a dual connectivity state; and
releasing, by the user equipment, the first SCG and adding the second SCG based on the fifth configuration message, wherein the second SCG is different from the first SCG.

10. A method for configuring a secondary cell group, comprising:
receiving, by a network device, a user equipment assistance information message from user equipment, wherein the user equipment assistance information message comprises an information element indicating an SCG configuration mode, and the SCG configuration mode comprises adding an SCG, releasing an SCG, not adding an SCG within a specified time range, or adding an SCG after release; and
determining, by the network device, a configuration scheme of the user equipment based on the SCG configuration mode.

11. The method according to claim 10, wherein the SCG configuration mode is the not adding an SCG within a specified time range, the user equipment assistance information message further comprises a first time range, and the first time range indicates not adding an SCG within the first time range.

12. The method according to claim 11, wherein the method further comprises:
sending, by the network device, a first configuration message to the user equipment, wherein the first configuration message indicates the user equipment to release a first SCG; and
starting, by the network device, a timer, wherein timing duration of the timer is the first time range, and ignoring, by the network device, a fifth measurement message from the user equipment during running of the timer, wherein the fifth measurement message comprises a measurement result of a second SCG, and the second SCG is different from the first SCG.

13. The method according to claim 12, wherein the method further comprises:
disabling, by the network device, the timer; and
sending, by the network device, a second configuration message to the user equipment, wherein the second configuration message comprises a configuration of the second SCG, and the second configuration message indicates the user equipment to add the second SCG.

14. The method according to claim 13, wherein before the sending, by the network device, a second configuration message to the user equipment, the method further comprises:
sending, by the network device, a first measurement message to the user equipment, wherein the first measurement message carries SCG measurement control information; and
receiving, by the network device, a second measurement message from the user equipment, wherein the second measurement message carries a measurement result of the second SCG.

15. The method according to claim 10, wherein the SCG configuration mode is the adding an SCG after release, and the method further comprises:
sending, by the network device, a third configuration message to the user equipment, wherein the third configuration message indicates the user equipment to release a first SCG.

16. The method according to claim 15, wherein the method further comprises:
sending, by the network device, a fourth configuration message to the user equipment, wherein the fourth configuration message comprises a configuration of a second SCG, the fourth configuration message indicates the user equipment to add the second SCG, and the second SCG is different from the first SCG.

17. The method according to claim 16, wherein before the sending, by the network device, a fourth configuration message to the user equipment, the method further comprises:
sending, by the network device, a third measurement message to the user equipment, wherein the third measurement message carries SCG measurement control information; and
receiving, by the network device, a fourth measurement message from the user equipment, wherein the fourth measurement message carries a measurement result of the second SCG.

18. The method according to claim 10, wherein the SCG configuration mode is the adding an SCG after release, and the method further comprises:
sending, by the network device, a fifth configuration message to the user equipment, wherein the fifth configuration message further comprises a configuration of a second SCG, the fifth configuration message indicates the user equipment to release a first SCG and add the second SCG, and the second SCG is different from the first SCG.

19. An apparatus for configuring a secondary cell group, comprising:
a processing unit, configured to determine a secondary cell group SCG configuration mode; and
a transceiver unit, configured to send a user equipment assistance information message to a network device, wherein the user equipment assistance information message comprises an information element indicating the SCG configuration mode, and the SCG configuration mode comprises adding an SCG, releasing an SCG, not adding an SCG within a specified time range, or adding an SCG after release.

20. The apparatus according to claim 19, wherein the SCG configuration mode is the not adding an SCG within a specified time range, the user equipment assistance information message further comprises a first time range, and the first time range indicates not adding an SCG within the first time range.

21. The apparatus according to claim 20, wherein the transceiver unit is further configured to receive a first configuration message from the network device, wherein the first configuration message indicates the user equipment to release a first SCG, and the user equipment is in a dual connectivity state; and
the processing unit is configured to release the first SCG based on the first configuration message.

22. The apparatus according to claim 21, wherein the transceiver unit is further configured to receive a second configuration message from the network device, wherein the second configuration message comprises a configuration of a second SCG, and the second configuration message indicates the user equipment to add the second SCG; and
the processing unit is further configured to add the second SCG based on the second configuration message, wherein the second SCG is different from the first SCG.

23. The apparatus according to claim 22, wherein before the user equipment receives the second configuration message from the network device, the transceiver unit is further configured to receive a first measurement message from the network device, wherein the first measurement message carries SCG measurement control information;
the processing unit is further configured to measure channel quality of an SCG based on the first measurement message; and
the transceiver unit is further configured to send a second measurement message to the network device, wherein the second measurement message carries a measurement result of the second SCG.

24. The apparatus according to claim 19, wherein the SCG configuration mode is the adding an SCG after release, and the transceiver unit is further configured to receive a third configuration message from the network device, wherein the third configuration message indicates the user equipment to release a first SCG, and the user equipment is in a dual connectivity state; and
the processing unit is further configured to release the first SCG based on the third configuration message.

25. The apparatus according to claim 24, wherein the transceiver unit is further configured to receive a fourth configuration message from the network device, wherein the fourth configuration message comprises a configuration of a second SCG, the fourth configuration message indicates the user equipment to add the second SCG, and the second SCG is different from the first SCG; and
the processing unit is further configured to add the second SCG based on the fourth configuration message.

26. The apparatus according to claim 25, wherein before the user equipment receives the fourth configuration message from the network device, the transceiver unit is further configured to receive a third measurement message from the network device, wherein the third measurement message carries SCG measurement control information;
the processing unit is further configured to measure channel quality of an SCG based on the third measurement message; and
the transceiver unit is further configured to send a fourth measurement message to the network device, wherein the fourth measurement message carries a measurement result of the second SCG.

27. The apparatus according to claim 19, wherein the SCG configuration mode is the adding an SCG after release, and the transceiver unit is further configured to receive a fifth configuration message from the network device, wherein the fifth configuration message further comprises a configuration of a second SCG, the fifth configuration message indicates the user equipment to release a first SCG and add the second SCG, and the user equipment is in a dual connectivity state; and
the processing unit is further configured to release the first SCG and add the second SCG based on the fifth configuration message, wherein the second SCG is different from the first SCG.

28. An apparatus for configuring a secondary cell group, comprising:
a transceiver unit, configured to receive a user equipment assistance information message from user equipment, wherein the user equipment assistance information message comprises an information element indicating an SCG configuration mode, and the SCG configuration mode comprises adding an SCG, releasing an SCG, not adding an SCG within a specified time range, or adding an SCG after release; and
a processing unit, configured to determine a configuration scheme of the user equipment based on the SCG configuration mode.

29. The apparatus according to claim 28, wherein the SCG configuration mode is the not adding an SCG within a specified time range, the user equipment assistance information message further comprises a first time range, and the first time range indicates not adding an SCG within the first time range.

30. The apparatus according to claim 29, wherein the transceiver unit is further configured to send a first configuration message to the user equipment, wherein the first configuration message indicates the user equipment to release a first SCG; and
the processing unit is further configured to start a timer, wherein timing duration of the timer is the first time range, and the network device ignores a fifth measurement message from the user equipment during running of the timer, wherein the fifth measurement message comprises a measurement result of a second SCG, and the second SCG is different from the first SCG.

31. The apparatus according to claim 30, wherein the processing unit is further configured to disable the timer; and
the transceiver unit is further configured to send a second configuration message to the user equipment, wherein the second configuration message comprises a configuration of the second SCG, and the second configuration message indicates the user equipment to add the second SCG.

32. The apparatus according to claim 31, wherein before the network device sends the second configuration message to the user equipment, the transceiver unit is further configured to send a first measurement message to the user equipment, wherein the first measurement message carries SCG measurement control information; and
the transceiver unit is further configured to receive a second measurement message from the user equipment, wherein the second measurement message carries a measurement result of the second SCG.

33. The apparatus according to claim 29, wherein the SCG configuration mode is the adding an SCG after release, and the transceiver unit is further configured to send a third configuration message to the user equipment, wherein the third configuration message indicates the user equipment to release a first SCG.

34. The apparatus according to claim 33, wherein the transceiver unit is further configured for the network device to send a fourth configuration message to the user equipment, wherein the fourth configuration message comprises a configuration of a second SCG, the fourth configuration message indicates the user equipment to add the second SCG, and the second SCG is different from the first SCG.

35. The apparatus according to claim 34, wherein before the network device sends the fourth configuration message to the user equipment, the transceiver unit is further configured to send a third measurement message to the user equipment, wherein the third measurement message carries SCG measurement control information; and
the transceiver unit is further configured to receive a fourth measurement message from the user equipment, wherein the fourth measurement message carries a measurement result of the second SCG.

36. The apparatus according to claim 29, wherein the SCG configuration mode is the adding an SCG after release, and the transceiver unit is further configured to send a fifth configuration message to the user equipment, wherein the fifth configuration message further comprises a configuration of a second SCG, the fifth configuration message indicates the user equipment to release a first SCG and add the second SCG, and the second SCG is different from the first SCG.

37. A communication apparatus, comprising a processor, wherein the processor is configured to invoke the computer program from a memory and run the computer program, to enable the communication apparatus to perform the method according to any one of claims 1 to 9 or claims 10 to 18.

38. A computer storage medium, storing a program, wherein the program is for implementing the method according to any one of claims 1 to 9 or claims 10 to 18.

39. A circuit system, comprising a processor configured to invoke a computer program from a memory and run the computer program, to enable a communication device in which the circuit system is installed to perform the method according to any one of claims 1 to 9, or perform the method according to any one of claims 10 to 18.

40. A communication system, comprising the apparatus according to any one of claims 19 to 27 and the apparatus according to any one of claims 28 to 36.
